# NEUE EUROPÄISCHE PATENTSCHRIFT

(11) **EP 1 167 303 B2**
(45) Veröffentlichungstag und Bekanntmachung des Hinweises auf die Entscheidung über den Einspruch: **26.02.2014**
(45) Hinweis auf die Patenterteilung: 25.02.2009
(21) Anmeldenummer: 00113477.4
(22) Anmeldetag: 26.06.2000
(51) Int. Cl.: C02F 3/12, C02F 11/02

(54) **Verfahren zur Reduzierung von bei der Reinigung von Abwasser in einer biologischen Oxidationsstufe einer Kläranlage anfallendem Überschuss-Klärschlamm**
Method for reducing sludge resulting from the cleaning of waste water in a biological oxidation step of a purification plant
Procédé de rédution de boues provenant du traitement d'eaux résiduaires dans une étape d'oxidation biologique d' une station d'épuration

(43) Veröffentlichungstag der Anmeldung: 02.01.2002
(73) Patentinhaber: Kalos, Georg, 27777 Ganderkesee (DE); Schäfer, Joachim Paul, 40885 Ratingen (DE); Kalogeropoulos, George, Nea Philadelphia Athen (GR)
(72) Erfinder: Kalos, Georg, 27777 Ganderkesee (DE); Schäfer, Joachim Paul, 40885 Ratingen (DE); Kalogeropoulos, George, Nea Philadelphia, Athen (GR)
(74) Vertreter: Weigel, Matthias

(56) Entgegenhaltungen:
- EP-A- 0 656 234
- EP-A- 0 659 695
- US-A- 3 787 316
- PATENT ABSTRACTS OF JAPAN vol. 1997, no. 09, 30. September 1997 (1997-09-30) & JP 09 117800 A (KURITA WATER IND LTD), 6. Mai 1997 (1997-05-06)
- PATENT ABSTRACTS OF JAPAN vol. 1998, no. 06, 30. April 1998 (1998-04-30) & JP 10 034183 A (KURITA WATER IND LTD), 10. Februar 1998 (1998-02-10)
- 'Vermeidung von Klärschlamm bei Abwasserreinigung in Kläranlagen' EUWID WASSER UND ABWASSER Nr. 13, 29 Juni 1999,
- 'Biologische Zusatzstoffe in der Abwasserreinigung: Bakterien, Enzyme, Vitamine, Algenpräparate' ATV-ARBEITSBERICHTE Bd. 7, Nr. 90, 1937, Seiten 793 - 799
- T. GSCHLÖßL ET AL.: 'Einsatz von biologischen Zusatzstoffen bei der Reinigung von kommunalem Abwasser' ABWASSERREINIGUNG Bd. 46, Nr. 12, 1999, Seiten 1880 - 1883
- Z. BAKER ET AL.: 'Action of synthetic detergents on the metabolism of bacteria' J. EXPER. MED. Bd. 73, Nr. 249, Februar 1941, Seiten 249 - 271
- Handelsregisterauszuge der Einsprechenden, der Bioserve GmbH
- O. STARK ET AL.: 'Überschusschlammvermeidung durch die Dosierung oberflächenaktiver Substanzen' WASSER - ABWASSER Bd. 42, Nr. 11, November 2001, Seiten 756 - 760
- DR.-ING. J. STRUNKHEIDE: 'Überschussschlamm-Reduzierung mit Hilfe des Bioserve-Verfahrens am Beispiel der Kläranlagen Neuss-Süd und Lemke' IWB INSTITUT WASSER UND BODEN E.V. 2002, Seite 1
- 'Gelsenwasser steigert Umsatz um 2,2 Prozent auf 406 Mio. ?' EUWID WASSER UND ABWASSER Nr. 11, 26 April 2005, Seite 6
- Bioserve-Verfahren: weniger Klärschlamm - weniger Kosten, DBU aktuell Nr. 3, Maärz 2005
- SCHMID SCHMIEDER: 'Abfallwirtschaft in Forschung und Praxis', Bd. 134, ERICH SCHMIDT VERLAG Seiten 281 - 285
- Innovationspreis Success 2005 für innovative Unternehmen www.stz.stz.rip.de/ir-start
- PROF. DR.-ING. H. WITTE: 'Gutachten zur Beurteilung des WWE-bionorm -Verfahrens' IWB GEMEINNÜTZIGES INSTITUT WASSER UND BODEN E.V. 21 November 2001,
- K. SÖLTER ET AL.: 'Ein Verfahren zur Überschussschlamm-Reduktion: Ergebnisse beim großtechnischen Einsatz' ZEITSCHRIFT FÜR UMWELTTECHNIK Nr. 9, September 2001, Seiten 26 - 29
- 'Doping für Mikroben, Abfall, Abwasser, Luft & Boden' ENTSORGA MAGAZIN ENTSORGUNGSWIRTSCHAFT Nr. 6, Juni 2001, Seiten 28 - 39
- Eidesstattliche Erklärung, Herrn Stefan Broker, Bonn 29.11.2010
- 'Vermeidung von Klärschlamm bei Abwasserreinigung in Kläranlagen' EUWID WASSER UND ABWASSER Nr. 13, 29 Juni 1999, Seite 1
- DR. K. KOSSWIG ET AL.: 'Die Tenside', 1993, CARL HANSER VERLAG, MÜNCHEN - WIEN Seiten 409 - 460

## Beschreibung

Die Erfindung betrifft ein Verfahren zur Reduzierung von bei der Reinigung von Abwasser in einer biologischen Oxidationsstufe einer Kläranlage anfallendem Überschuß-Klärschlamm, wobei dem Abwasser gasförmig in das Abwasser eingebrachter Sauerstoff zugegeben wird.

Moderne Kläranlagen sowohl im kommunalen als auch im industriellen Bereich führen eine Abwasserreinigung in einem mehrstufigen Verfahren durch. Hierbei wird bei der Mehrzahl der heute gebräuchlichen Kläranlagen neben einer mechanischen und gegebenenfalls einer chemischen Reinigung des Abwassers in einer Klärstufe das Abwasser einer biologischen Reinigung unterzogen. Das zu reinigende Abwasser wird hierzu nach einer mechanischen Vorreinigung und einer eventuellen Aussonderung toxischer Substanzen einer biologischen Klärstufe zugeführt. Derartige biologische Klärstufen wirken über Mikroorganismen, die in dem Wasser enthaltene organische Bestandteile zu bestimmten Abbauprodukten zersetzen. Hierbei werden aerob arbeitende Mikroorganismen bevorzugt, die über biologische Oxidation größere organische Moleküle zu Kohlendioxid (CO₂) und Wasser zersetzen. Dies geschieht beispielsweise in sogenannten Belebungsbecken, in denen eine Abwasser-Belebtschlamm-Suspension enthalten ist, wobei der Belebtschlamm die organischen Stoffe zersetzende Mikroorganismen als Biomasse trägt. Aus der EP 0 659 695 A1 ist ein Verfahren nach dem Oberbegriff des Anspruch 1 bekannt

Für eine aerobe Zersetzung der in dem Abwasser mitgeführten organischen Fracht ist dabei die Zugabe von Sauerstoff zu dem Abwasser zwingend erforderlich.

Hierzu wird ein sauerstoffhaltiges Gas, beispielsweise Luft, in das Abwasser eingeblasen, vorzugsweise direkt in dem Bereich der biologischen Klärstufe (vgl. z.B. EP-A-0 659 695 und JP-A -09 117800).

Neben den erwünschten Abbauprodukten, vornehmlich Kohlendioxid und Wasser, fallen in einer solchen biologischen Stufe, in dieser Anmeldung auch als biologische Oxidationsstufe bezeichnet, größere Mengen an Überschuß-Klärschlamm an. Dieser setzt sich zusammen aus während der Verweildauer des Abwassers in der biologischen Oxidationsstufe nicht abgebauter organischer Fracht und überschüssiger Biomasse aus dem Belebtschlamm. Der Überschuß-Klärschlamm wird dem System, beispielsweise in einem Nachklärbecken, entzogen und fällt als Abfallprodukt einer Kläranlage mit biologischer Oxidationsstufe an. Der Überschuß-Klärschlamm muß schließlich aufwendig entsorgt werden. Dies geschieht beispielsweise durch anaeroben Abbau des Klärschlamms in Faultürmen, durch Trocknung und anschließende Ausbringung des Trocknungsrückstandes als Düngemittel auf landwirtschaftliche Nutzflächen, durch Verbrennung oder in den meisten Fällen in Form einer Lagerung auf entsprechend für diese Zwecke zugelassenen Deponien. In jedem Fall ist die Entsorgung des Überschuß-Klärschlammes für einen Klärwerkbetreiber mit entsprechenden Entsorgungskosten verbunden. Hinzu kommt, daß sowohl das Ausbringen des Klärschlammes auf landwirtschaftlichen Nutzflächen als auch dessen Endlagerung auf entsprechend ausgezeichneten Deponien wegen der in dem Überschuß-Klärschlamm vorhandenen Schadstoffe auch aus ökologischer Sicht problematisch ist.

Es ist damit wünschenswert, die in einer biologischen Oxidationsstufe eines Klärwerks anfallende Menge an Überschuß-Klärschlamm zu reduzieren, im Optimalfall sogar das Anfallen von Überschuß-Klärschlamm insgesamt zu vermeiden.

Die vorliegende Erfindung hat es sich dementsprechend zur **Aufgabe** gemacht, ein Verfahren zur Reduzierung von bei der Reinigung von Abwasser in einer biologischen Oxidationsstufe einer Kläranlage anfallenden Überschuß-Klärschlamm zu entwickeln. Das Verfahren soll darüber hinaus einfach durchführbar und ohne großen Aufwand in bestehende Kläranlagen integrierbar sein.

Zur **Lösung** dieser Aufgabe wird mit der Erfindung ein Verfahren mit den Mekmalen nach Anspruch 1 vorgeschlagen.

Durch ein erhöhtes Angebot an den Mikroorganismen in der biologischen Oxidationsstufe zur Verfügung stehendem, im Abwasser gelösten Sauerstoff wir das in der biologischen Oxidationsstufe vorherrschende Gleichgewicht zwischen aeroben und anaeroben Mikroorganismen zugunsten der Aerobier verschoben. Bei einem erhöhten Angebot des biologisch verfügbaren Sauerstoffs können die bezüglich der Nährstoffverarbeitung effizienteren Aerobier das Nährstoffangebot, um das sie mit den Anaerobiem konkurrieren, besser nutzen, und es findet folglich ein verbesserter Abbau der im Abwasser vorhandenen organischen Fracht durch aerobe Zersetzung statt. Eine verbesserte biologische Zersetzung der im Abwasser mitgeführten organischen Fracht bewirkt nun aber gerade einen geringeren Austrag an nicht abgebautem organischen Material, welches wiederum den Überschuss-Klärschlamm bildet. Der anfallende Überschuss-Klärschlamm kann somit hinsichtlich seiner Menge verringert werden. Im Optimalfall kann eine Verringerung bis hin zu einer gänzlichen Vermeidung von Überschuss-Klärschlamm erfolgen.

Zur Erhöhung des Gehaltes an in dem Abwasser gelösten Sauerstoff wird gemäß der Erfindung mindestens ein das Lösungsvermögen von gasförmig in das Wasser eingebrachtem Sauerstoff erhöhendes Tensid eingesetzt. Die Wirkungsweise des Tensides beruht dabei auf der Tatsache, dass es die Oberflächenspannung der in dem Abwasser befindlichen, sauerstoffhaltigen Gasblasen herabsetzt, so dass mehr Sauerstoff aus der Gasblase durch die Grenzfläche sauerstoffhaltiges Gas/Abwasser in das Abwasser eindiffundieren und somit in Lösung gehen kann. Der derart in dem Abwasser in Lösung gegangene Sauerstoff steht dann den aerob arbeitenden Mikroorganismen direkt zur Verfügung, welche dann die organische Fracht unter biologischer Oxidation abbauen können.

Das mindestens eine Tensid wird dabei in einer Menge zugegeben, die bezogen auf die Gesamtmenge der in dem Abwasser vorhandenen, abzubauenden Verunreinigungen gering ist. Ist, wie gemäß einer vorteilhaften Ausgestaltung der Erfindung vorgeschlagen, das mindestens eine zugegebene Tenside biologisch abbaubar, so soll die Auswahl des bzw. der Tenside und dessen bzw. deren mengenmäßige Bemessung so vorgenommen werden, daß die Menge des durch Zugabe des mindestens einen Tensides zusätzlich für die Mikroorganismen verfügbar gemachten Sauerstoffes größer ist als die zum Abbau der zugegebenen Tenside benötigte Sauerstoffmenge. Somit wird ein Nettozugewinn an biologisch verfügbarem Sauerstoff erzielt, welcher, wie gewünscht, die Verbesserung der Abbaueffektivität durch die Mikroorganismen nach sich zieht und schließlich zur beabsichtigten Reduzierung von Überschuß-Klärschlamm beiträgt. In diesem Punkt unterscheidet sich das erfindungsgemäß zugegebene, mindestens eine Tensid auch von den bereits im Abwasser vorhandenen Tensiden, welche selbst in einer derart großen Menge als das Abwasser belastende Fracht mitgeführt werden, daß ein möglicherweise durch diese Tenside erreichter höherer Sauerstoffgehalt im Abwasser beim Abbau dieser Tenside mindestens kompensiert, wenn nicht überkompensiert wird.

Gemäß einem weiteren vorteilhaften Merkmal der Erfindung wird vorgeschlagen, daß dem Abwasser eine Mischung von mindestens zwei verschiedenen Tensiden zugegeben wird. Durch eine Zugabe von mindestens zwei Tensiden in einer Mischung kann gezielt eine Abstimmung auf die jeweiligen Erfordernisse erfolgen. So kann durch die dosierte Zugabe zweier oder mehrerer Tenside in einem entsprechenden Mischungsverhältnis die Löslichkeit des gasförmig in das Abwasser eingebrachten Sauerstoffs noch weiter erhöht werden.

Mit besonderem Vorteil wird gemäß einem weiteren Merkmal der Erfindung dem Abwasser mindestens ein Biotensid zugegeben. Biotenside haben sich ebenso wie die gemäß einem weiteren vorteilhaften Merkmal der Erfindung vorgeschlagenen, Phospholipide als besonders wirksam bei der Erhöhung der Löslichkeit des gasförmig in das Abwasser eingebrachten Sauerstoffs in dem Abwasser erwiesen. Als Phospholipide kommen hierbei Phosphorsäuremono- und Phosphorsäurediester mit diversen Fettsäuren in Betracht. Solche sind beispielsweise Phosphatidylcholine, Sphingolipide, Phosphoglyceride etc.

Neben Biotensiden oder Phospholipiden können weiterhin Aniontenside, Kationtenside, nichtionische Tenside oder Amphotenside verwendet werden.

Wichtige Vertreter der verwendbaren Aniontenside sind Salze von sauren Schwefelsäureestern primärer und sekundärer Alhohole, wie beispielsweise Alkylsulfate, Alkylpolyglycolethersulfate und Alkylphenolpolyglycolethersulfate, sowie Salze von Sulfonsäuren, wie beispielsweise Alkylsulfonate, Alkylarylsulfonate.

Hinsichtlich der Kationtenside kommen Alkylaminhydrohalogenide, Alkyltrimethylammoniumhalogenide sowie Alkylpyridiniumhalogenide in Frage.

Als verwendbare Vertreter der nicht ionischen Tenside kommen im Rahmen der Erfindung Alkylpolyglycolether, Alkylphenolpolyglycolether, Acylpolyglycolether, Alkylpolyglyciside, oxethylierte Sulfosäureamide sowie oxethylierte Carbonsäureamide in Betracht.

Als für die Erfindung verwendbare wichtige Vertreter der Amphotenside werden beispielsweise Fettsäureamidoalkylbetain, Fettsäureamidoalkylglycinat etc. vorgeschlagen.

Mit der Erfindung wird weiterhin vorgeschlagen, daß die mindestens eine das Lösungsvermögen des in das Abwasser eingebrachten Sauerstoffs erhöhende Substanz in gelöster Form dem Abwasser zugegeben wird. Hierdurch kann eine gute und zügige Verteilung der die mindestens einen das Lösungsvermögen des in das Abwasser eingebrachten Sauerstoffs erhöhenden Substanz erreicht werden.

Die das Lösungsvermögen des in das Abwasser eingebrachten Sauerstoffs erhöhende chemische Substanz wird dem System gemäß einem weiteren Merkmal der Erfindung mit Vorteil an einem Punkt in einer Klärschlamm-Rückführleitung zugegeben. Dadurch daß mit Biomasse durchmengtes Abwasser das Belebungsbecken ständig in Richtung einer Nachklärung verläßt, erfolgt in einer Kläranlage mit Belebungsbecken ein stetiger Austrag von Biomasse. Dieser sedimentiert in einem Nachklärbecken und wird als Klärschlamm zumindest teilweise wiederum in Richtung des Belebungsbeckens zurückgeführt. Wird, wie mit der Erfindung vorgeschlagen, die mindestens eine das Lösungsvermögen des in das Abwasser eingebrachten Sauerstoffs erhöhende Substanz dem hochkonzentrierten Klärschlamm in einer solchen Rückführleitung zugeführt, so kann eines oder mehrere der in der Substanz enthaltenen Tenside ein Aufbrechen von Zellen der Mikroorganismen bewirken, womit die Vermehrung der Mikroorganismen aufgrund des höheren Sauerstoffangebotes begrenzt wird. Weiterhin werden beim Aufplatzen der Zellen Enzyme freigesetzt, welche wiederum zu einem Aufplatzen weiterer Zellen beitragen können. Auf diese Weise kann neben der gewünschten Erhöhung der biologisch verfügbaren Sauerstoffkonzentration im Abwasser mit den zugegebenen Tensiden auch die expontielle Vermehrung der Mikroorganismen aufgrund des erhöhten Sauerstoffangebotes gestoppt werden, und es wird eine stabile Menge an lebenden Mikroorganismen in dem Belebungsbecken eingestellt. Würde dies nicht erfolgen, so käme es zu einer Überpopulation, welche zu einem Umkippen der biologischen Oxidationsstufe führen würde.

Eine weitere Verbesserung des erfindungsgemäßen Verfahrens hinsichtlich der schnellen zeitlichen Umsetzung sowie der Effizienz der Reduzierung des Überschuß-Klärschlamms ergibt sich, wenn in der biologischen Oxidationsstufe vorhandene Mikroorganismen durch dosierte Zugabe des Nährstoffzusatzmittels zu dem Abwasser biologisch aktiviert werden. Durch eine solche Maßnahme kann bereits ohne ein zusätzliches Sauerstoffangebot das zwischen den Aerobiern und Anerobiern in der biologischen Oxidationsstufe herrschende Gleichgewicht zugunsten der Aerobier verschoben werden. Hierzu müssen solche Nährstoffe gewählt werden, die bevorzugt durch Aerobier verwertet werden können, so daß deren Wachstum und Vermehrung zusätzlich unterstützt wird.

Zudem können dem Nährstoffzusatzmittel weitere Stoffe wie Glutamat, Huminsäure und Vitamin C zugegeben werden.

Auch bezüglich des Nährstoffzusatzmittels wird bevorzugt, daß es in Form einer Nährstoffe in gelöster Form enthaltenen Flüssigkeit in das Abwasser eingegeben wird. Ähnlich wie für die Tenside gilt auch hier, daß sich bei einer flüssigen Zugabe eine schnellstmögliche, gleichmäßige Verteilung der eingebrachten Nährstoffzusätze ergibt. Als Flüssigkeit, in der die Nährstoffe gelöst sind, ist Wasser zu bevorzugen. Die Extraktion selbst kann beispielsweise in einer wäßrigen Lösung im alkalischen, im sauren oder im pH-neutralen Bereich oder aber in einem organischen Lösungsmittel, wie beispielsweise Methanol, Ethanol, Chloroform, Äther oder dergleichen geschehen.

Gemäß einem weiteren vorteilhaften Merkmal der Erfindung ist vorgesehen, daß das Nährstoffzusatzmittel dem Abwasser nahe seinem Eintritt in die Kläranlage zugegeben wird, vorzugsweise nach Durchtritt durch einen eingangs der Kläranlage installierten Rechen. Dadurch wird bewirkt, daß das in gering dosierten Mengen zugegebene Nährstoffzusatzmittel sich auf dem Weg zu der biologischen Oxidationsstufe, auf dem es mehrere vorgeschaltete Reinigungsstufen durchtritt, optimal in dem zu reinigenden Abwasser verteilt. Somit können in dem Abwasser enthaltene Mikroorganismen bereits auf dem Weg in die biologische Oxidationsstufe das Nährstoffzusatzmittel verstoffwechseln, so daß eine optimale Aktivierung dieser Mikroorganismen erfolgt. In der biologischen Oxidationsstufe sind die Mikroorganismen dann aktiviert und können die im Abwasser mitgeführte organische Fracht unter Umsetzung des zugegebenen Sauerstoffs oxidieren.

Das erfindungsgemäße Verfahren eignet sich hervorragend zur Nachrüstung bereits bestehender Kläranlagen und erfordert hierbei keine bzw. lediglich geringe bauliche Maßnahmen. Es kann somit auf einfache Weise in bestehende Kläranlagen nachgerüstet werden, ohne daß hierzu wesentliche Investitionen erforderlich sind. Somit lassen sich auch in bereits bestehenden Kläranlagen die anfallenden Mengen des Überschuß-Klärschlammes effizient reduzieren.

Weitere Merkmale und Vorteile der Erfindung ergeben sich aus dem nachfolgend beschriebenen Ausführungsbeispiel im Zusammenhang mit der einzigen beigefügten Figur.

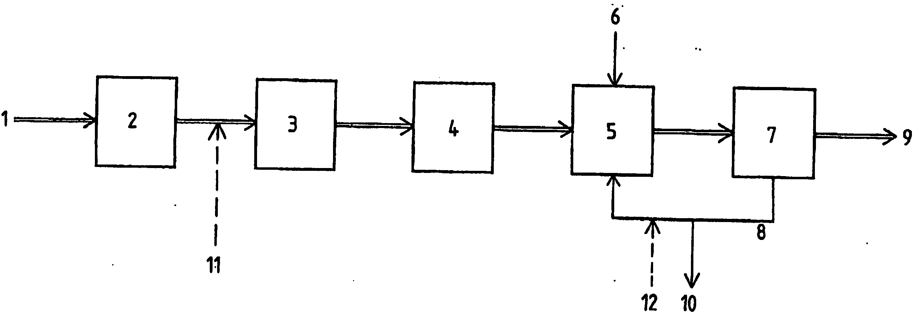

In der einzig beigefügten Figur 1 ist schematisch der Aufbau einer konventionellen Kläranlage dargestellt. Der Weg zu klärenden Abwassers durch die Kläranlage ist mit Doppellinienpfeilen angedeutet. Als Rohabwasser 1 tritt das Abwasser in die Kläranlage ein, wobei es zunächst auf einen oder mehrere Rechen 2 trifft, die es mechanisch von groben Verunreinigungen trennen. Hier werden beispielsweise im Rohabwasser 1 mitgeführte Plastiktüten, Äste und Zweige, Dosen etc. abgesondert. Im Anschluß an die mechanische Vorreingigung mit Hilfe der Rechen trifft das zu reinigende Abwasser auf einen Sandfang 3, den es mit geringer Fließgeschwindigkeit durchströmt, so daß sich im Abwasser mitgeführter Sand absetzten kann. Der Sandfang 3 verfügt dabei in der Mehrzahl der Klärwerke über eine Belüftung, die bereits für eine erste Anreicherung des Abwassers mit Sauerstoff sorgt.

Im Anschluß an den Sandfang 3 wird das Abwasser einem Vorklärbecken 4 zugeführt, in dem beispielsweise eine Fettabscheidung, eine chemische Ausfällung von im Abwasser vorhandenen Phosphorverbindungen und ähnlichen anorganischen Stoffen sowie eine Sedimentation feinerer Schwebstoffe erfolgen kann. Eine Ausfällung von Phosphorverbindungen ist deshalb wichtig, damit diese nicht zu einer Eutrophierung von Gewässern führen, wenn sie die Kläranlage mit dem ansonsten gereinigten Abwasser in Richtung solcher Gewässer verlassen. Zu diesem Zwecke werden die Phosphorverbindungen für gewöhnlich durch Zugabe von Eisenionen in der Vorklärung in Form von schwerlöslichen Eisenphosphatverbindungen ausgefällt.

In dem Belebungsbecken 5 befinden sich, wie oben bereits erwähnt, Mikroorganismen, die eine aerobe Zersetzung organischer, in dem Abwasser mitgeführte Verunreinigungen bewirken. Die Mikroorganismen sind hierzu in dem Belebungsbecken als sogenannte Klärschlammflocke eingebracht, welche sich als über Schleimstoffe zusammengehaltene Koagulate von lebenden sowie abgestorbenen Mikroorganismen darstellen. Diese Klärschlammflocke wird beispielsweise durch mechanisches Rühren in dem Abwasser in der Schwebe gehalten. Weiterhin wird an dieser Stelle sauerstoffhaltiges Gas 6, beispielsweise Luft, zugegeben, dessen Sauerstoffgehalt von den Mikroorganismen zur biologischen Oxidation der organischen Fracht verwendet wird. Die Zugabe des sauerstoffhaltigen Gases an dieser Stelle bewirkt zusätzlich eine Verwirbelung des Abwassers und damit eine Durchmischung des Abwassers mit der Klärschlammflocke.

In dem Belebungsbecken wandeln aerobe Mikroorganismen unter biologischer Oxidation die im Abwasser mitgeführten organischen Verunreinigungen gegebenenfalls über mehrere Zwischenschritte zumindest teilweise zu Wasser und Kohlendioxid als Endprodukte um. Das Kohlendioxid entweicht aus dem Belebungsbecken in die Atmosphäre, wohingegen das als Stoffwechselendprodukt entstehende Wasser das Abwasser vermischt und die Kläranlage später mit dem gereinigten Abwasser verläßt.

Von dem Belebungsbecken gelangt das Abwasser in ein Nachklärbecken 7, wobei es aus dem Belebungsbecken einen gewissen Anteil Klärschlamm mit sich führt. Dieser wird in der Nachklärung 7 von dem Abwasser getrennt (beispielsweise durch Sedimentation) und über eine Klärschlamm-Rückführleitung 8 wieder in Richtung des Belebungsbeckens 5 geführt. Das Abwasser verläßt das Nachklärbecken 7 der Kläranlage als gereinigtes Abwasser 9 und kann, gegebenenfalls nach einer weiteren Nachbehandlung, wie beispielsweise einer Chlorierung, wieder dem Wasserkreislauf zugeführt werden. Der über die Rückführleitung 8 rückgeführte Klärschlamm wird jedoch nicht vollständig dem Belebungsbecken 5 wieder zugeführt, da der Anteil der Klärschlammflocke im Abwasser im Belebungsbecken 5 nicht zu sehr ansteigen darf, damit die durch die Mikroorganismen durchgeführte biologische Oxidation nicht zum Erliegen kommt. Somit wird aus der Rückführleitung 8 überschüssiger Klärschlamm 10 abgeführt, der zum einen abgestorbene Mikroorganismen aus dem Belebungsbecken 5, zum anderen aber auch nicht oder nur unvollständig abgebaute organische Verunreinigungen aus dem Abwasser enthält. Dieser abgeführte Klärschlamm 10 fällt als Abfallprodukt an und muß von dem Betreiber des Klärwerks entsorgt werden.

Das erfindungsgemäße Verfahren hat zum Ziel, den Überschuß-Klärschlamm 10, der dem System entnommen und entsorgt werden muß, hinsichtlich der Menge zumindest zu reduzieren, im Optimalfall das Anfallen von Überschuß-Klärschlamm 10 sogar gänzlich zu vermeiden. In dem hier erläuterten Ausführungsbeispiel werden dazu zunächst die Betriebsparameter der Kläranlage, auf die das Verfahren anzuwenden ist, über einen längeren Zeitraum (im Bereich von einigen Monaten bis zu einigen Jahren) aufgenommen, und es werden die Verfahrensparameter anhand der ermittelten Betriebsparameter errechnet. Betriebsparameter der Kläranlage, auf die das erfindungsgemäße Verfahren angewendet werden soll, umfassen dabei die durchschnittliche Abwassermenge im Zu- bzw. Ablauf, die durchschnittliche CSB-Fracht, die durchschnittliche BSB-Fracht, die durchschnittliche Stickstoff-Fracht, die durchschnittliche Phoshor-Fracht, die durchschnittliche Menge der Trockensubstanz der Belebung, den Sauerstoffbereich während der Belüftung, den Schlammindex, die Sichttiefe in der Nachklärung, den Glühverlust (dieser bestimmt den Anteil an organischer Reste im Klärschlamm), sowie die Einsatzmenge von Eisensalzen in Bezug auf die Phosphorfracht.

Zur Durchführung des erfindungsgemäßen Verfahrens werden nun zunächst Nährstoffzusatzmittel in das zu reinigende Abwasser eingebracht, und zwar direkt in der Belebungsstufe oder in Fließrichtung des Abwassers gesehen vor der Belebungsstufe. Die Menge an einzubringendem Nährstoffzusatzmittel bestimmt sich dabei aus den ermittelten Betriebsparametern der Kläranlage. Bevorzugt wird, wie in der Figur 1 mit gestricheltem Pfeil angedeutet, das Nährstoffzusatzmittel 11 dem Abwasser direkt im Anschluß an den Durchtritt des Abwassers durch den Rechen 2 zugegeben, so daß das Nährstoffzusatzmittel mit dem Abwasser optimal vermischt werden kann, bis dieses in das Belebungsbecken 5 eintritt.

Um die Reduzierung von Überschuß-Klärschlamm gemäß dem erfindungsgemäßen Verfahren einzuleiten, wird zunächst, wie in der Figur schematisch dargestellt, ein Nährstoffzusatzmittel 11 in das Abwasser eingegeben. Gleichzeitig wird eine eventuelle Zugabe von Eisensalzen, wie sie im bisherigen Klärprozess zur Fällung von im Abwasser enthaltenen Phosphorverbindungen eingesetzt worden ist, eingestellt oder zumindest stark reduziert. Weiterhin wird die Entnahme von Überschuß-Klärschlamm zunächst gestoppt, so daß über einen vorberechneten Zeitraum aufgrund des gezielten und dosierten Zusatzes des Nährstoffzusatzmittels eine Verschiebung des in der Belebungsstufe bestehenden Gleichgewichts zwischen Aerobiern und Anaerobiern zu Gunsten der Aerobier bewirkt wird und zugleich eine Vermehrung der in dem Belebungsbecken angesiedelten Mikroorganismen bis zu einer vorbestimmten Menge erfolgt.

In einer zweiten Stufe wird dann eine anhand der Kläranlagenparameter berechnete Einmaldosis einer tensidhaltigen Lösung 12 an der in Figur 1 angedeuteten Stelle in die Rückführleitung 8 eingebracht, so daß zum einen durch das Aufplatzen von Zellen der Mikroorganismen eine weitere Vermehrung der in dem Belebungsbecken 5 vorhandenen Mikroorganismen gestoppt wird und zum anderen der Grad des in dem Belebungsbecken im Abwasser biologisch verfügbaren Sauerstoffs erhöht wird. Schließlich werden kontinuierlich Nährstoffzusatzmittel 11 sowie die tensidhaltige Lösung 12 in einer vorberechneten Dosierung zugegeben, so daß die Besiedlung des Belebungsbeckens 5 durch Mikroorganismen auf einem gegenüber dem vorherigen Status quo erhöhten Niveau stabil gehalten und deren biologisches Oxidationsvermögen durch verbesserte Verfügbarmachung des Sauerstoffes gesteigert wird. Die gegenüber der Ausgangssituation vermehrte Menge an Mikroorganismen, die zudem in einer zu Gunsten der Aerobier verschobenen, anderen Zusammensetzung vorliegt, ist nunmehr aufgrund der erhöhten Verfügbarkeit von biologisch umsetzbarem Sauerstoff in der Lage, sowohl die organischen Verunreinigungen des Abwassers selbst verbessert zu Kohlendioxid und Wasser zu verstoffwechseln als auch zusätzlich eine erhöhte Last an rückgeführtem Klärschlamm, also insbesondere organischem Material hervorgerufen durch abgestorbene Mikroorganismen umzusetzen. Im Ergebnis ergibt sich, daß weniger Überschuß-Klärschlamm 10 anfällt, wobei bei lediglich moderater Auslastung des Klärwerks eine Reduzierung bis hin zu einer völligen Vermeidung von Überschuß-Klärschlamm erreicht werden kann.

Das Nährstoffzusatzmittel hat folgende Bestandteile:

| | |
|---|---|
| Alginat | 10,0 - 25,0 %, |
| Menthol | 2,0 - 5,0 %, |
| Nagarmothaöl | 0,5 - 2,0 %, |
| Orangenöl | 2,0 - 5,0 %, |
| Baldrianöl | 2,0 - 5,0 %, |
| Eucalyptusöl | 2,0 - 5,0 %, |
| Latschenkiefernöl | 2,0 - 5,0 %, |
| Tee Tree Öl | 2,0 - 5,0 % |
| Zwiebelöl | 0,5 - 2,0 %, |
| Thymianextrakt | 1,5 - 5,0 % , |
| Rosmarinextrakt | 1,5 -5,0 % sowie |
| Wassser | ad 100 %. |

Für die Steigung des Lösungsvermögens des in das Abwasser eingebrachten Sauerstoffs wird beispielhaft die Anwendung der nachfolgenden Mischung vorgeschlagen:

| | |
|---|---|
| Fettalkoholpolyalkylenglykolether | 9,0 - 18,0 %, |
| Natriumalkylsulfat | 17,0 - 30,0 %, |
| Phosphatidylcholin | 5,0 - 13,0 %, |
| das oben beschriebene Nährstoffzusatzmittel | 5,0 - 25,0 % sowie |
| Wasser | ad 100,0 %. |

Es hat sich darüber hinaus herausgestellt, daß durch das erfindungsgemäße Verfahren ein Ausfällen von Phosphorverbindungen nicht mehr erforderlich ist, so daß zum einen der Einsatz von Eisensalzen unterbleiben kann, und zum anderen keine zu entsorgenden Eisen-Phosphor-Verbindungen mehr anfallen. Der gesamte Phosphoreintrag des Abwassers wird in der mit dem erfindungsgemäßen Verfahren behandelten, biologischen Oxidationsstufe umgesetzt und abgebaut.

Durch eine Online-Überwachung der Betriebsparameter des Klärwerks und eine rechnergesteuerte Verarbeitung dieser Daten ist es zudem möglich, anstelle statisch vorausberechneter Dosierungsmengen des Nährstoffzusatzmittels 11 sowie der tensidhaltigen Lösung 12 die Dosierung dynamisch dem jeweiligen Zustand der Kläranlage anzupassen.

Insgesamt ist das erfindungsgemäße Verfahren auf einfache Weise auf fast alle bestehenden Kläranlagen anzuwenden, wobei es zur Einführung des Verfahrens in den herkömmlichen Klärprozess lediglich geringer baulicher Umrüstungsmaßnahmen und folglich geringer Investitionen bedarf. Das Ergebnis, die Vermeidung von Überschuß-Klärschlamm, stellt dabei für den Betreiber der Kläranlage sowohl einen wirtschaftlichen Gewinn infolge der Einsparung von Entsorgungskosten als auch einen Beitrag zur Ökologie dar, da der in einem Klärwerk für gewöhnlich anfallende Überschuß-Klärschlamm oftmals mit umweltschädlichen Bestandteilen belastet ist.

### Bezugszeichenliste

- 1: Rohabwasser
- 2: Rechen
- 3: Sandfang
- 4: Vorklärbecken
- 5: Belebungsbecken
- 6: sauerstoffhaltiges Gas
- 7: Nachklärbecken
- 8: Rückführleitung
- 9: gereinigtes Abwasser
- 10: Überschuß-Klärschlamm
- 11: Nährstoffzusatzmittel
- 12: Tensidhaltige Lösung

## Patentansprüche

1. Verfahren zur Reduzierung von bei der Reinigung von Abwasser in einer biologischen Oxidationsstufe (5) einer Kläranlage anfallendem Überschuss-Klärschlamm (10), wobei dem Abwasser gasförmig in das Abwasser eingebrachter Sauerstoff zugegeben wird, der Gehalt an in dem Abwasser gelösten Sauerstoff durch Zugabe mindestens eines das Lösungsvermögen des in das Abwasser eingebrachten Sauerstoffs erhöhenden Tensides gesteigert wird, und in der biologischen Oxidationsstufe (5) vorhandene Mikroorganismen durch dosierte Zugabe eines Nährstoffzusatzmittels (11) zu dem Abwasser biologisch aktiviert werden, wobei das Nährstoffzusatzmittel dem Abwasser nahe seinem Eintritt in die Kläranlage, vorzugsweise nach Durchtritt durch einen eingangs der Kläranlage installierten Rechen (2), zugegeben wird,
**dadurch gekennzeichnet, dass** dem Abwasser ein Nährstoffzusatzmittel zugegeben wird, welches folgende Bestandteile aufweist:
| | |
|---|---|
| Alginat | 10,0 - 25,0 %, |
| Menthol | 2,0 - 5,0 %, |
| Nagarmothaöl | 0,5 - 2,0 %, |
| Orangenöl | 2,0 - 5,0 %. |
| Baldrianöl | 2,0 - 5,0 %, |
| Eucalyptusöl | 2,0 - 5,0 %, |
| Latschenkiefernöl | 2,0 - 5,0 %, |
| Tee Tree Öl | 2,0 - 5,0 %, |
| Zwiebelöl | 0,5 - 2,0 %, |
| Thymianextrakt | 1,5 - 5,0 %, |
| Rosmarinextrakt | 1,5 - 5,0 % sowie |
| Wasser | ad 100 % |

2. Verfahren nach Anspruch 1, **dadurch gekennzeichnet, dass** die mindestens eine das Lösungsvermögen des in das Abwasser eingebrachten Sauerstoffs erhöhende Substanz ein Tensid in einer bezogen auf die Gesamtmenge der im Abwasser vorhandenen, abzubauenden Verunreinigungen geringen Menge enthält.

3. Verfahren nach Anspruch 2, **dadurch gekennzeichnet, dass** als das mindestens eine Tensid ein biologisch abbaubares Tensid gewählt wird.

4. Verfahren nach einem der Ansprüche 2 oder 3, **dadurch gekennzeichnet, dass** dem Abwasser eine Mischung von mindestens zwei verschiedenen Tensiden zugegeben wird.

5. Verfahren nach einem der Ansprüche 2 bis 4, **dadurch gekennzeichnet, dass** dem Abwasser ein Biotensid zugegeben wird.

6. Verfahren nach einem der Ansprüche 2 bis 5, **dadurch gekennzeichnet, dass** dem Abwasser ein Phospholipid zugegeben wird.

7. Verfahren nach einem mindestens eine der voranstehenden Ansprüche, **dadurch gekennzeichnet, dass** die das Lösungsvermögen des in das Abwasser eingebrachten Sauerstoffs erhöhende chemische Substanz in gelöster Form in die Kläranlage eingegeben wird.

8. Verfahren nach einem der voranstehenden Ansprüche, **dadurch gekennzeichnet, dass** die Zugabe der mindestens einen das Lösungsvermögen des in das Abwasser eingebrachten Sauerstoffs erhöhenden chemischen Substanz an einem Punkt in einer Klärschlamm-Rückführleitung (8) erfolgt.

9. Verfahren nach einem der voranstehenden Ansprüche, **dadurch gekennzeichnet, dass** dem Abwasser als die mindestens eine das Lösungsvermögen des in das Abwasser eingebrachten Sauerstoffs erhöhende Substanz eine Lösung zugegeben wird, die folgende Bestandteile aufweist:
| | |
|---|---|
| Fettalkoholpolyalkylenglykolether | zu 9,0 % bis 18,0 %, |
| Natriumalkylsulfat | zu 17,0 % bis 30,0% sowie |
| Wasser. | |

10. Verfahren nach einem der voranstehenden Ansprüche, **dadurch gekennzeichnet, dass** ein Pflanzenextrakte enthaltendes Nährstoffzusatzmittel (11) dem Abwasser zugegeben wird.

11. Verfahren nach einem der voranstehenden Ansprüche, **dadurch gekennzeichnet, dass** das Nährstoffzusatzmittel (11) als eine Nährstoffe in gelöster Form enthaltene Flüssigkeit in das Abwasser eingegeben wird.

## Claims

1. Method for reducing excess sludge (10) resulting from the cleaning of waste water in a biological oxidation step (5) of a purification plant, wherein oxygen introduced into the waste water in a gaseous state is added to the waste water, wherein the content of oxygen dissolved in the waste water is increased by the addition of at least one surfactant increasing the dissolution capacity of the oxygen introduced into the waste water, and microorganisms present in the biological oxidation step (5) are biologically activated by a dosed addition of a nutrient additive (11) to the waste water, wherein the nutrient additive is added to the waste water in the vicinity of its entry into the purification plant, preferably after passing a screen installed in the entrance area of the purification plant, **characterized in that** a nutrient additive including the following components is added to the waste water:
| | |
|---|---|
| alginate | 10.0 - 25.0% |
| menthole | 2.0 - 5.0% |
| nagarmotha oil | 0.5 - 2.0% |
| orange oil | 2.0 - 5.0% |
| valerian oil | 2.0 - 5.0% |
| eucalyptus | oil 2.0 - 5.0% |
| mountain pine | oil 2.0 - 5.0% |
| tea tree oil | 2.0 - 5.0% |
| onion oil | 0.5 - 2.0% |
| thyme extract | 1.5 - 5.0% |
| rosemary extract | 1.5 - 5.0% and |
| water | at 100%. |

2. Method according to claim 1, **characterized in that** the at least one substance which increases the dissolution capacity of the oxygen introduced into the waste water contains a surfactant at a small amount, referring to the total amount of impurities which are present in the waste water and which have to be degraded.

3. Method according to claim 3, **characterized in that** a bio-degradable surfactant is selected as the at least one surfactant.

4. Method according to one of the claims 2 or 3, **characterized in that** a mixture of at least two different surfactants is added to the waste water.

5. Method according to one of the claims 2 to 4, **characterized in that** a bio-surfactant is added to the waste water.

6. Method according to one of the claims 2 to 5, **characterized in that** a phospholipid is added to the waste water.

7. Method according to at least one of the preceding claims, **characterized in that** the chemical substance increasing the dissolution capacity of the oxygen introduced into the waste water is supplied to the purification plant in a dissolved state.

8. Method according to one of the preceding claims, **characterized in that** the addition of the at least one chemical substance increasing the dissolution capacity of the oxygen introduced into the waste water takes place at some point in a sludge return passage (8).

9. Method according to one of the preceding claims, **characterized in that** as the at least one substance increasing the dissolution capacity of the oxygen introduced into the waste water a solution including the following components is admixed to the waste water:
| | |
|---|---|
| fatty alcohol polyalkylene glycol ether | at 9.0% to 18.0% |
| sodium alkyl sulphate | at 17.0% to 30.0% and water. |

10. Method according to one of the preceding claims, **characterized in that** a nutrient additive (11) containing plant extracts is added to the waste water.

11. Method according to one of the preceding claims, **characterized in that** the nutrient additive (11) is supplied to the waste water as a liquid which contains nutrients in the dissolved state.

## Revendications

1. Procédé pour réduire les boues résiduaires excédentaires (10) qui résultent du nettoyage des eaux usées dans un étage d'oxydation biologique (5) d'une station d'épuration, de l'oxygène introduit dans les eaux usées étant ajouté sous forme gazeuse aux eaux usées, le taux d'oxygène dissous dans les eaux usées étant augmenté par l'addition d'au moins un agent tensioactif qui augmente le pouvoir dissolvant de l'oxygène introduit dans les eaux usées, et des micro-organismes qui existent dans l'étage d'oxydation biologique (5) étant activés biologiquement par l'addition dosée d'un additif de nutriments (11) aux eaux usées, l'additif de nutriments étant ajouté aux eaux usées près de leur entrée dans la station d'épuration, de préférence après le passage par un râteau (2) installé à l'entrée de la station d'épuration, **caractérisé en ce qu'** il est ajouté aux eaux usées un additif de nutriments qui présente les constituants suivants :
| | |
|---|---|
| alginate | 10 à 25 % |
| menthol | 2 à 5 % |
| huile de nagarmotha | 0,5 à 2 % |
| huile d'orange | 2 à 5 % |
| huile de valériane | 2 à 5 % |
| huile d'eucalyptus | 2 à 5 % |
| huile de pin | 2 à 5 % |
| huile d'arbre à thé | 2 à 5 % |
| huile d'oignon | 0,5 à 2 % |
| extrait de thym | 1,5 à 5 % |
| extrait de romarin | 1,5 à 5 % ainsi que |
| eau | pour 100 %. |

2. Procédé selon la revendication 1, **caractérisé en ce que** la substance qui existe au moins qui augmente le pouvoir dissolvant de l'oxygène qui est introduit dans les eaux usées contient un agent tensioactif en une faible quantité par rapport aux impuretés qui existent dans les eaux usées qui doivent être décomposées.

3. Procédé selon la revendication 2, **caractérisé en ce qu'** un agent tensioactif qui peut être dégradé biologiquement est sélectionné comme l'agent tensioactif qui existe au moins.

4. Procédé selon l'une des revendications 2 ou 3, **caractérisé en ce qu'** un mélange d'au moins deux agents tensioactifs différents est ajouté aux eaux usées.

5. Procédé selon l'une des revendications 2 à 4, **caractérisé en ce qu'** un agent tensioactif bio est ajouté aux eaux usées.

6. Procédé selon l'une des revendications 2 à 5, **caractérisé en ce qu'** un phospholipide est ajouté aux eaux usées.

7. Procédé selon au moins l'une des revendications précédentes, **caractérisé en ce que** la substance chimique qui augmente le pouvoir dissolvant de l'oxygène introduit dans les eaux usées est ajoutée sous forme dissoute dans la station d'épuration.

8. Procédé selon l'une des revendications précédentes, **caractérisé en ce que** l'addition de la substance chimique qui existe au moins qui augmente le pouvoir dissolvant de l'oxygène introduit dans les eaux usées se fait à un point dans une conduite de recyclage des boues usées (8).

9. Procédé selon l'une des revendications précédentes, **caractérisé en ce que** comme substance qui existe au moins qui augmente le pouvoir dissolvant de l'oxygène qui est introduit dans les eaux usées on ajoute aux eaux usées une solution qui présente les constituants suivants :
| | |
|---|---|
| éther de polyalkylène glycol d'alcool gras | de 9 % à 18 % |
| sulfate d'alkyle de sodium | de 17 % à 30% ainsi que de l'eau. |

10. Procédé selon l'une des revendications précédentes, **caractérisé en ce qu'** un additif de nutriments (11) qui contient des extraits de plante est ajouté aux eaux usées.

11. Procédé selon l'une des revendications précédentes, **caractérisé en ce que** l'additif de nutriments (11) est introduit dans les eaux usées comme un liquide qui contient des nutriments sous forme dissoute.
